# EUROPÄISCHE PATENTSCHRIFT

(11) **EP 1 125 469 B1**
(45) Veröffentlichungstag und Bekanntmachung des Hinweises auf die Patenterteilung: **30.01.2008**
(21) Anmeldenummer: 99960846.6
(22) Anmeldetag: 02.11.1999
(51) Int. Cl.: H04Q 11/04

(54) **KOMMUNIKATIONSSYSTEM, MIT ÜBER EIN PAKET-ORIENTIERTES KOMMUNIKATIONSNETZ MIT EINER KOMMUNIKATIONSANLAGE IN VERBINDUNG STEHENDEN KOMMUNIKATIONSENDGERÄTEN**
COMMUNICATION SYSTEM WITH COMMUNICATION TERMINAL DEVICES THAT ARE CONNECTED TO A COMMUNICATIONS INSTALLATION VIA A PACKET-ORIENTED COMMUNICATION NETWORK
SYSTEME DE COMMUNICATION COMPORTANT DES APPAREILS DE COMMUNICATION EN LIAISON AVEC UNE INSTALLATION DE COMMUNICATION PAR L'INTERMEDIAIRE D'UN RESEAU DE COMMUNICATION ORIENTE PAQUETS

(30) Priorität: 03.11.1998 DE 19850641
(43) Veröffentlichungstag der Anmeldung: 22.08.2001
(73) Patentinhaber: Siemens Enterprise Communications GmbH & Co. KG, 81379 München (DE)
(72) Erfinder: WAHLER, Josef, D-82024 Taufkirchen (DE)
(74) Vertreter: Maier, Daniel Oliver
(86) Internationale Anmeldenummer: PCT/DE1999/003481
(87) Internationale Veröffentlichungsnummer: WO 2000/027163

(56) Entgegenhaltungen:
- SCHLICHTHAERLE D: "HYBRID ATM/ISDN SUBSCRIBER CONNECTION TO A BROADBAND ISPBX" INTERN. CONFERENCE ON COMPUTER COMMUNICATION. PROCEEDINGS OF THE CONFERENCE. TOWARDS A NEW WORLD IN COMPUTER COMMUNICATION, 28. September 1992 (1992-09-28), XP000671919
- VERBAND DEUTSCHER ELEKTROTECHNIKER (VDE) ET AL: "ALL BAND SWITCHING NODE ARCHITECTURE FOR FLEXIBLE AND COST-EFFECTIVE EVOLUTION TOWARD B-ISDN" PROCEEDINGS OF THE INTERNATIONAL SWITCHING SYMPOSIUM,DE,BERLIN, VDE VERLAG, Bd. SYMP. 15, 1995, Seiten 57-61, XP000495538 ISBN: 3-8007-2093-0

## Beschreibung

Die Erfindung betrifft ein Kommunikationssystem gemäß dem Oberbegriff des Patentanspruchs 1.

Sowohl aus der deutschen Offenlegungsschrift DE 196 04 244 A1 als auch aus Schlichthärle D.: "Hybrid ATM/ISDN Subscriber Connection to a Broadband ISPBX", Intern. Conference on Computer Communication - Proceedings of the Conference - Towards a New World in Computer Communication, 28. September 1992, XP000671919, ist ein Kommunikationssystem bekannt, bei dem die einer Vermittlungsanlage zugeordneten Kommunikationsendgeräte über ein ATM-basiertes Kommunikationsnetz mit der Vermittlungsanlage verbunden sind. Hierbei werden Teilnehmerschnittstellen zum Anschluß von Kommunikationsendgeräten durch eine Mehrzahl von an das ATM-basierte Kommunikationsnetz angeschlossenen ATM-Übergabeeinheiten - in der Literatur häufig kurz mit ATM-Hub bezeichnet - zur Verfügung gestellt. Die Vermittlungsanlage und die ATM-Übergabeeinheit weisen dabei jeweils eine ATM-Anschlußeinheit auf, über die einerseits eine Verbindung mit dem ATM-basierten Kommunikationsnetz realisiert wird und andererseits eine bidirektionale Umwandlung zwischen dem vermittlungsanlagen- bzw. übergabeeinheiteninternen Datenformat und dem Datenformat des ATM-basierten Kommunikationsnetzes erfolgt.

Moderne ATM-Übergabeeinheiten weisen üblicherweise 64 Teilnehmerschnittstellen zum Anschluß von Kommunikationsendgeräten an ein ATM-basierte Kommunikationsnetz auf. Insbesondere werden dabei über eine ATM-Übergabeeinheit mittels S₀-Schnittstellen ISDN-Kommunikationsendgeräte (Integrated Services Digital Network) oder mittels daraus abgeleiteten Schnittstellen, wie beispielsweise U_{P0}-Schnittstellen digitale Kommunikationsendgeräte mit einem ATM-basierten Kommunikationsnetz verbunden. Allgemein umfaßt eine U_{P0}- bzw. eine S₀-Schnittstelle zum einen 2 Nutzdatenkanäle, welche als ISDN-orientierte B-Kanäle mit einer Übertragungsrate von jeweils 64 kBit/s ausgestaltet sind und zum anderen einen Signalisierungskanal, welcher als ISDN-orientierter D-Kanal mit einer Übertragungsrate von 16 kBit/s ausgestaltet ist.

Ein Anschluß der Vermittlungsanlage und der ATM-Übergabeeinheiten an ein ATM-basiertes Kommunikationsnetz erfolgt häufig mittels einer sogenannten STM1-Schnittstelle (Synchroner Transfer Modus) mit einer maximalen Übertragungsbitrate von 155 MBit/s. Eine derartige STM1-Schnittstelle bereitstellende Anschlußbaugruppe wird unter dem internen Namen 'STMA-Anschlußbaugruppe' in Kommunikationsanlagen der Firma Siemens AG eingesetzt. Im weiteren wird dieser Name für derartige, eine STM1-Schnittstelle aufweisende Anschlußbaugruppen verwendet.

Mittels einer in der Vermittlungsanlage angeordneten STMA-Anschlußbaugruppe besteht derzeit die Möglichkeit 32 Teilnehmerschnittstellen einer, an ein ATM-basiertes Kommunikationsnetz angeschlossenen ATM-Übergabeeinheit zu unterstützen, d.h. es ist eine Datenübermittlung zwischen der STMA-Anschlußbaugruppe und 32 unterschiedlichen an einer ATM-Übergabeeinheit angeschlossenen Kommunikationsendgeräten realisierbar. Dies entspricht lediglich einer maximalen Übertragungsbitrate von 8 MBit/s über die von der STMA-Anschlußbaugruppe bereitgestellte STM1-Schnittstelle (mit einer maximalen Übertragungsbitrate von 155 MBit/s).

Für eine Unterstützung sämtlicher 64 Teilnehmerschnittstellen einer, über ein ATM-basiertes Kommunikationsnetz angeschlossenen ATM-Übergabeeinheit durch die Vermittlungsanlage sind somit 2 STMA-Anschlußbaugruppen in der Vermittlungsanlage notwendig. Da sowohl die STMA-Anschlußbaugruppen als auch die ATM-Anschlußeinheit einer ATM-Übergabeeinheit nur jeweils eine STM1-Schnittstelle aufweisen, ist die Zwischenschaltung eines zusätzlichen ATM-Koppelmoduls notwendig. Durch das ATM-Koppelmodul werden die zwischen der Vermittlungsanlage und der ATM-Übergabeeinheit zu übermittelnden Daten von den beiden STMA-Anschlußbaugruppen auf die ATM-Anschlußeinheit der ATM-Übergabeeinheit konzentriert, bzw. von der ATM-Anschlußeinheit auf die beiden STMA-Anschlußbaugruppen aufgesplittet.

Durch die Verwendung einer erweiterten STMA-Anschlußbaugruppe, die insgesamt 64 Teilnehmerschnittstellen unterstützt, kann auf das Zwischenschalten eines zusätzlichen Koppelmoduls verzichtet werden, da durch eine derartige erweiterte STMA-Anschlußbaugruppe alle 64 Teilnehmerschnittstellen einer ATM-Übergabeeinheit unterstützt werden und diese somit direkt an die erweiterte STMA-Anschlußbaugruppe angeschlossen werden kann. Somit wird zwar nur noch für jede an das ATM-basierte Kommunikationsnetz angeschlossene ATM-Übergabeeinheit eine - durch eine erweitere STMA-Anschlußbaugruppe zur Verfügung gestellte - STM1-Schnittstelle der Vermittlungsanlage belegt, es wird aber immer noch lediglich eine maximale Übertragungsbitrate von 16 MBit/s über die STM1-Schnittstelle (mit einer maximalen Übertragungsbitrate von 155 MBit/s) realisiert.

Aufgabe der vorliegenden Erfindung ist es, eine Anordnung anzugeben, durch welche bei Anschluß von mehreren ATM-Übergabeeinheiten an ein paket-orientiertes Kommunikationsnetz eine Datenübermittlung zwischen einer Vermittlungsanlage und den ATM-Übergabeeinheiten über einen Netzzugang der Vermittlungsanlage unter Ausnutzung der von dem Netzzugang bereitgestellten Übertragungsbandbreite erfolgen kann.

Gelöst wird die Aufgabe ausgehend von den Merkmalen des Oberbegriffs des Patentanspruchs 1 durch dessen kennzeichnende Merkmale.

Zum besseren Verständnis des prinzipiellen Aufbaus einer Vermittlungsanlage erscheint es erforderlich zunächst noch einmal auf bereits bekannte Prinzipien näher einzugehen.

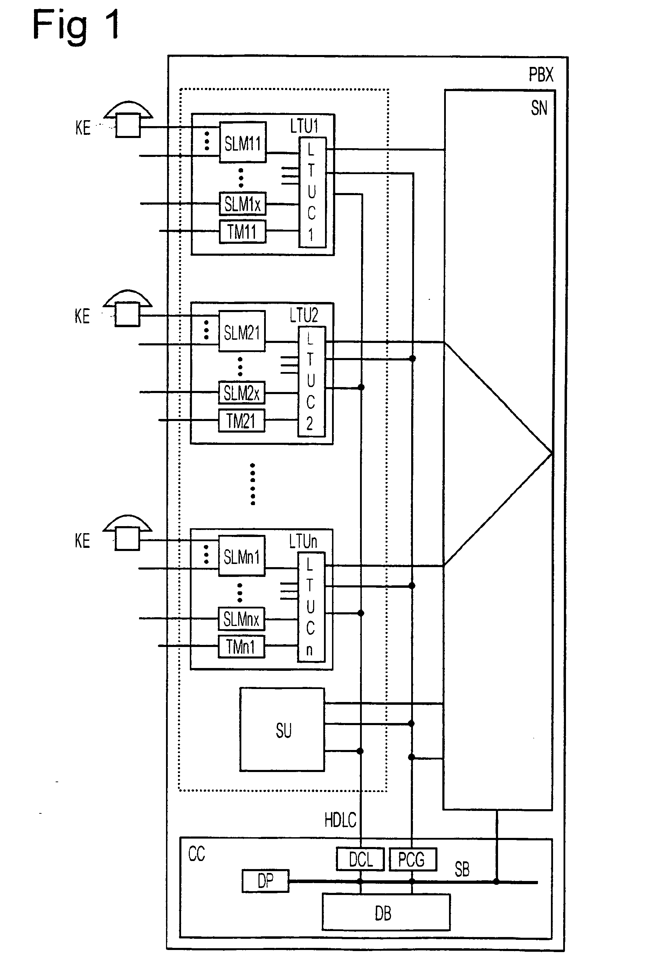

Einem schnelleren Verständnis der Zusammenhänge dient hierbei Fig. 1, die eine schematische Darstellung der wesentlichen Funktionseinheiten einer Vermittlungsanlage PBX zeigt. Die Vermittlungsanlage PBX weist eine zentrale Steuereinheit CC auf, die mit Anschlußbaugruppen und einem Koppelnetz SN verbindbar ist. Die Anschlußbaugruppen umfassen insbesondere Teilnehmeranschlußbaugruppen SLM11...SLM1x, SLM21...SLM2x, SLMn1...SLMnx sowie sogenannte Leitungssatzbaugruppen TM11, TM21, TMn1.

Die Teilnehmeranschlußbaugruppen SLM weisen Teilnehmerschnittstellen zum Anschluß von Kommunikationsendgeräten KE an die Vermittlungsanlage PBX auf. So können beispielsweise über Sₒ-Schnittstellen ISDN-Kommunikationsendgeräte oder über daraus abgeleiteten Schnittstellen, wie beispielsweise Uₚₒ-Schnittstellen digitale Kommunikationsendgeräte an die Vermittlungsanlage PBX angeschlossen werden. Des weiteren besteht die Möglichkeit über analoge a/b-Schnittstellen analoge Kommunikationsendgeräte und Facsimile-Endgeräte an die Vermittlungsanlage PBX anzuschließen.

Die Leitungssatzbaugruppen TM11, TM21, TMn1 dienen zum Anschluß der Vermittlungsanlage PBX an Kommunikationsnetze bzw. zur Verbindung mit weiteren Vermittlungsanlagen. Eine Verbindung mit einer weiteren Vermittlungsanlage erfolgt dabei beispielsweise über sogenannte 'PCM-Highways' (Pulse Code Modulation) - in der Literatur auch häufig als Primärmultiplexanschluß oder S_{2M}-Schnittstelle bezeichnet - die im allgemeinen zum einen 30 Nutzdatenkanäle, welche als ISDN-orientierte B-Kanäle mit einer Übertragungsrate von 64 kBit/s ausgestaltet sind und zum anderen einen Signalisierungskanal, welcher als ISDN-orientierter D-Kanal mit einer Übertragungsrate von 64 kBit/s ausgestaltet ist, umfassen. Für eine Datenübermittlung über einen derartigen 'PCM-Highway' ergibt sich somit eine maximale Übertragungsbitrate von 2 MBit/s. Eine bekannte Leitungssatzbaugruppe TM11, TM21, TMn1 zum Anschluß einer Vermittlungsanlage PBX an ein ATM-basiertes Kommunikationsnetz ist z.B. die in der Beschreibungseinleitung erwähnte 'STMA-Anschlußbaugruppe' der Firma Siemens.

Mehrere Peripheriemodule - Teilnehmeranschlußbaugruppen SLM11 ... SLM1x, SLM21...SLM2x, SLMn1...SLMnx sowie Leitungssatzbaugruppen TM11, TM21, TMn1 - können funktionell zu einer Anschlußeinheit LTU1,...,LTUn zusammengefaßt werden. Jeder Anschlußeinheit LTU1,...,LTUn ist dabei eine anschlußeinheitenindividuelle Steuerung LTUC1,...,LTUCn zugeordnet die jeweils mit dem Koppelnetz SN und der zentralen Steuereinheit CC über eine sogenannte LTU-Verbindungsleitung mit einer Übertragungsbandbreite von 4 x 4 MBit/s verbunden sind. Der Meldungsaustausch zwischen den Peripheriemodulen und der zentralen Steuereinheit CC erfolgt über einen Signalisierungskanal, der in der Figur mit dem Bezugszeichen HDLC (High Level Data Link Control) bezeichnet ist, im bekannten HDLC-Punkt-zu-Mehrpunkt-Verfahren.

Den Anschlußeinheiten LTU1,...,LTUn ist des weiteren eine sogenannte Signalisierungseinheit SU zugeordnet. Diese Signalisierungseinheit SU übernimmt die Zeichenversorgung von an der Vermittlungsanlage PBX angeschlossenen Kommunikationsendgeräten KE mit Hörtönen und gegebenenfalls mit in der Signalisierungseinheit SU gespeicherten Ansagen.

Die zentrale Steuereinheit CC übernimmt unter anderem die bei einer Kommunikationsverbindung zwischen Kommunikationsendgeräten KE anfallende vermittlungstechnische Verarbeitung, wie z.B. den Auf- und Abbau der Kommunikationsverbindung. Die zentrale Steuereinheit CC umfaßt im wesentlichen einen zentralen Prozessor DP, einen Prozessor für eine Signalisierungssteuerung DCL, einen Taktgenerator PCG und eine Datenbasis DB.

Ein wesentlicher Vorteil der erfindungsgemäßen Anordnung besteht nun darin, daß eine erfindungsgemäße Breitband-Anschlußeinheit zum Anschluß der Vermittlungsanlage an das paket-orientierte Kommunikationsnetz auf einfache Weise anstelle einer herkömmlichen Anschlußeinheit in bereits bestehende Vermittlungsanlagen implementiert werden kann, ohne Änderungen in der zentralen Steuerung der Vermittlungsanlage vornehmen zu müssen.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch den modularen Aufbau der Breitband-Anschlußeinheit, die sowohl mit Breitband-Anschlußbaugruppen als auch mit Schmalband-Anschlußbaugruppen bestückt werden kann, die Breitband-Anschlußeinheit auf einfache Weise an den aktuellen Bedarf nach breitbandigen oder schmalbandigen Teilnehmer- bzw. Netzanschlüssen angepaßt werden kann.

So kann die Breitband-Anschlußeinheit bei einer ausschließlichen Bestückung mit Breitband-Anschlußbaugruppen als separate Breitband-Vermittlungsanlage und bei einer zusätzlichen Bestückung mit Schmalband-Anschlußbaugruppen sowohl als Breitband-Vermittlungsanlage als auch im Zusammenwirken mit den übrigen Komponenten der Vermittlungsanlage als Schmalband-Vermittlungsanlage betrieben werden.

Ein Ausführungsbeispiel der Erfindung wird im folgenden anhand der Zeichnungen näher erläutert.

Dabei zeigen:
- Fig. 2:: ein Strukturbild zur schematischen Darstellung von über ein paket-orientiertes Kommunikationsnetz mit einer Vermittlungsanlage verbundenen Kommunikationsendgeräten;
- Fig. 3:: ein Strukturbild zur schematischen Darstellung der wesentlichen Funktionseinheiten einer in der Vermittlungsanlage angeordneten Breitband-Anschlußeinheit;
- Fig. 4:: ein Strukturbild zur schematischen Darstellung der wesentlichen Funktionseinheiten einer Koppel- und Steuereinheit der Breitband-Anschlußeinheit.

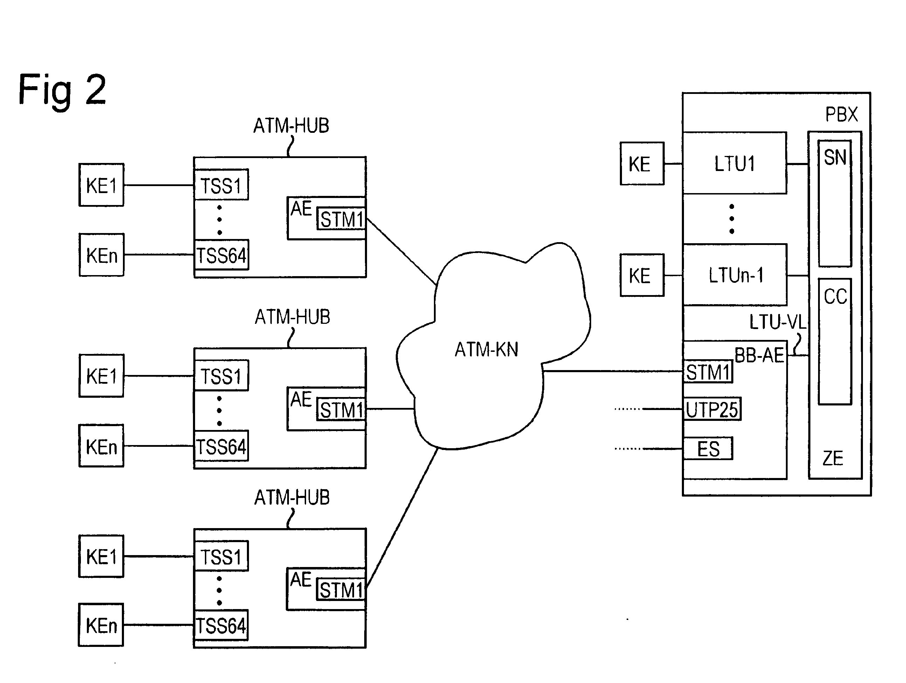

Fig. 2 zeigt eine schematische Darstellung einer Vermittlungsanlage PBX mit einer, anstelle einer herkömmlichen Anschlußeinheit in der Vermittlungsanlage PBX angeordneten Breitband-Anschlußeinheit BB-AE. Die Breitband-Anschlußeinheit BB-AE ist über eine - eventuell auch mehrere - LTU-Verbindungsleitungen LTU-VL (Line Trunk Unit) mit einer, ein Koppelnetz SN und eine zentrale Steuereinheit CC beinhaltenden Zentraleinheit ZE der Vermittlungsanlage PBX verbunden. Eine Datenübermittlung zwischen der Breitband-Anschlußeinheit BB-AE und der Zentraleinheit ZE über die LTU-Verbindungsleitung LTU-VL erfolgt gemäß eines zeitmultiplex-orientierten Datenformats, wobei über eine LTU-Verbindungsleitung LTU-VL eine Datenübermittlung mit einer maximalen Übertragungsbitrate von 4 x 4 = 16 MBit/s möglich ist.

Zusätzlich sind weitere - wie in Zusammenhang mit Fig. 1 beschrieben ausgestaltete - Anschlußeinheiten LTU1,...,LTUn-1 in der Vermittlungsanlage PBX angeordnet, wobei die Anschlußeinheiten LTU1,...,LTUn-1 über jeweils eine LTU-Verbindungsleitung LTU-VL mit der Zentraleinheit ZE der Vermittlungsanlage PBX verbunden sind. Durch die Anschlußeinheiten LTU1, ...,LTUn-1 erfolgt über Teilnehmerschnittstellen ein Anschluß von Kommunikationsendgeräten an die Vermittlungsanlage PBX, bzw. wird eine Verbindung mit einem Kommunikationsnetz oder einer weiteren Vermittlungsanlage realisiert. Beispielhaft sind an die Anschlußeinheiten LTU1,...,LTUn-1 Kommunikationsendgeräte KE angeschlossen.

Die Breitband-Anschlußeinheit BB-AE ist über eine sogenannte STM1-Schnittstelle (Synchroner Transfer Modus) mit einer maximalen Übertragungsbitrate von 155 MBit/s mit einem ATM-basierten (Asynchroner Transfer Modus) Kommunikationsnetz ATM-KN verbunden. Des weiteren weist die Breitband-Anschlußeinheit BB-AE weitere Schnittstellen zum Anschluß von Kommunikationsendgeräten oder Netzen an die Breitband-Anschlußeinheit BB-AE auf. Beispielhaft ist eine UTP25-Schnittstelle (Unshielded Twisted Pair) mit einer maximalen Übertragungsbitrate von 25 MBit/s und eine Ethernet-Schnittstelle ES zum Anschluß an ein, auf dem IP-Protokoll (Internet Protokoll) basierenden Rechnernetz dargestellt.

Des weiteren sind an das ATM-basierte Kommunikationsnetz ATM-KN sogenannte ATM-Übergabeeinheiten ATM-HUB - in der Literatur häufig mit 'ATM-Hub' bezeichnet - angeschlossen. Ein Anschluß der ATM-Übergabeeinheiten ATM-HUB an das ATM-basierte Kommunikationsnetz ATM-KN erfolgt dabei jeweils über eine, eine STM1-Schnittstelle aufweisende Anschlußeinheit AE. Die ATM-Übergabeeinheiten ATM-HUB weisen zusätzlich Teilnehmerschnittstellen TSS1,...,TSS64 zum Anschluß von Kommunikationsendgeräten an das ATM-orientierte Kommunikationsnetz ATM-KN auf. Beispielhaft sind Kommunikationsendgeräte KE1, ...,KEn dargestellt, die über die Teilnehmerschnittstellen TSS1,...,TSS64 an die ATM-Übergabeeinheiten ATM-HUB angeschlossen sind. Insbesondere werden über die ATM-Übergabeeinheiten mittels S₀-Schnittstellen ISDN-Kommunikationsendgeräte (Integrated Services Digital Network) oder mittels daraus abgeleiteten Schnittstellen, wie beispielsweise U_{P0}-Schnittstellen digitale Kommunikationsendgeräte mit dem ATM-basierten Kommunikationsnetz ATM-KN verbunden. Zusätzlich besteht die Möglichkeit über analoge a/b-Schnittstellen analoge Kommunikationsendgeräte an das ATM-orientierte Kommunikationsnetz ATM-KN anzuschließen.

Eine Datenübermittlung zwischen den Kommunikationsendgeräten KE1,...,KEn und der Vermittlungsanlage PBX erfolgt üblicherweise auf Basis des zeitmultiplex-orientierten Datenformats. Für eine Datenübermittlung zwischen den Kommunikationsendgeräten KE1,...,KEn und der Vermittlungsanlage PBX über das ATM-basierte Kommunikationsnetz ATM-KN erfolgt durch die Anschlußeinheiten AE der ATM-Übergabeeinheiten ATM-HUB und die Breitband-Anschlußeinheit BB-AE eine bidirektionale Umwandlung zwischen dem zeitmultiplex-orientierten Datenformat und dem Datenformat des ATM-orientierten Kommunikationsnetzes ATM-KN.

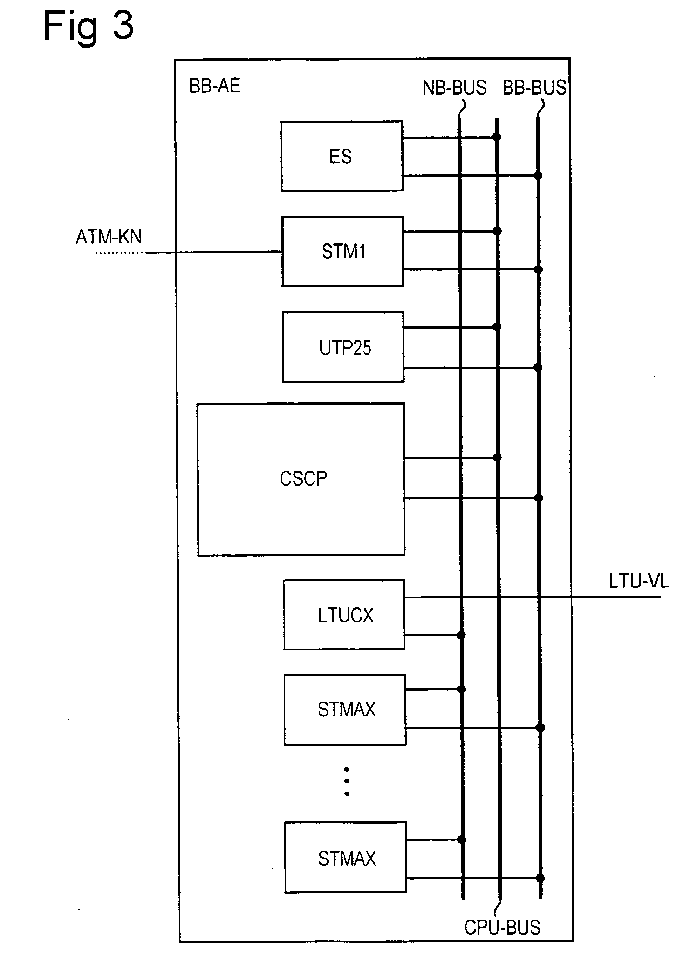

Fig. 3 zeigt eine schematische Darstellung der wesentlichen Funktionseinheiten der Breitband-Anschlußeinheit BB-AE. Die Breitband-Anschlußeinheit BB-AE weist für eine anschlußeinheiteninterne Datenübermittlung sowohl ein Breitband-Bussystem BB-BUS als auch ein Schmalband-Bussystem NB-BUS auf. In der Breitband-Anschlußeinheit BB-AE ist eine anschlußeinheitenindividuelle Steuerung LTUCX angeordnet, die sowohl an das Schmalband-Bussystem NB-BUS angeschlossen ist als auch über mindestens eine LTU-Verbindungsleitung LTU-VL mit der Zentraleinheit ZE der Vermittlungsanlage PBX verbunden ist. Durch die anschlußeinheitenindividuelle Steuerung LTUCX erfolgt eine bidirektionale Umwandlung zwischen dem Datenformat der LTU-Verbindungsleitung LTU-VL, wobei eine LTU-Verbindungsleitung LTU-VL vier zeitmultiplex-orientierte 4 MBit/s Datenübertragungsstrecken umfaßt und dem Datenformat des Schmalband-Bussystems NB-BUS, das sich aus einer Mehrzahl von zeitmultiplex-orientierte 2 MBit/s Datenübertragungsstrecken zusammensetzt.

Für eine Umwandlung des anschlußeinheiteninternen zeitmultiplex-orientierten Datenformats - entspricht dem für eine Datenübermittlung über das Schmalband-Bussystem NB-BUS eingerichteten Datenformat - auf das Datenformat des ATM-basierten Kommunikationsnetzes ATM-KN weist die Breitband-Anschlußeinheit BB-AE Umwandlungseinheiten STMAX auf. Die Umwandlungseinheiten STMAX sind einerseits über das Schmalband-Bussystem NB-BUS - jeweils über acht zeitmultiplex-orientierte 2 MBit/s Datenübertragungsstrecken - mit der anschlußeinheitenindividuellen Steuerung LTUCX und andererseits über eine UTOPIA-Schnittstelle (Universal Test and Operation PHY Interface for ATM) mit dem Breitband-Bussystem BB-BUS verbunden.

Über die acht zeitmultiplex-orientierten 2 MBit/s Datenübertragungsstrecken ist ein bidirektionaler Datentransfer zwischen der anschlußeinheitenindividuellen Steuerung LTUCX und einer Umwandlungseinheit STMAX mit einer maximalen Übertragungsbitrate von 16 MBit/s möglich. Dies entspricht beim vorliegenden zeitmultiplex-orientierten Datenformat einer Anzahl von 256 Multiplexkanälen, wodurch insgesamt 64 Teilnehmerschnittstellen durch eine Umwandlungseinheit STMAX unterstützt werden können.

An das Breitband-Bussystem BB-BUS sind für einen Anschluß von Kommunikationsendgeräten, Rechnern bzw. für eine Verbindung der Vermittlungsanlage PBX mit einem Kommunikations- oder Rechnernetz Breitband-Anschlußbaugruppen angeschlossen. Beispielhaft ist eine STM1-Anschlußbaugruppe dargestellt über die z.B. der Anschluß der Vermittlungsanlage PBX an das ATM-basierte Kommunikationsnetz ATM-KN realisiert wird. Des weiteren ist eine UTP25-Anschlußbaugruppe mit einer maximalen Übertragungsbitrate von 25 MBit/s zum Anschluß von Rechnern und eine Ethernet-Schnittstelle ES zum Anschluß der Vermittlungsanlage PBX an ein, auf dem IP-Protokoll (Internet Protokoll) basierenden Rechnernetz dargestellt. Alternativ können anstelle der Breitband-Anschlußbaugruppen STM1, UTP25, ES auch Schmalband-Anschlußbaugruppen an das Schmalband-Bussystem NB-BUS angeschlossen werden.

Die Anschlußbaugruppen STM1, UTP25, ES sind über das Breitband-Bussystem BB-BUS und ein CPU-Bussystem CPU-BUS (Central Processing Unit) mit einer Koppel- und Steuereinheit CSCP (Cell Switched Central Processor) verbunden. Insgesamt sind zusammen acht Baugruppen (ES, STM1, UTP25, CSCP, LTUCX, STMAX) an das Breitband-Bussystem BB-BUS und das Schmalband-Bussystem NB-BUS der Breitband-Anschlußeinheit BB-AE anschließbar.

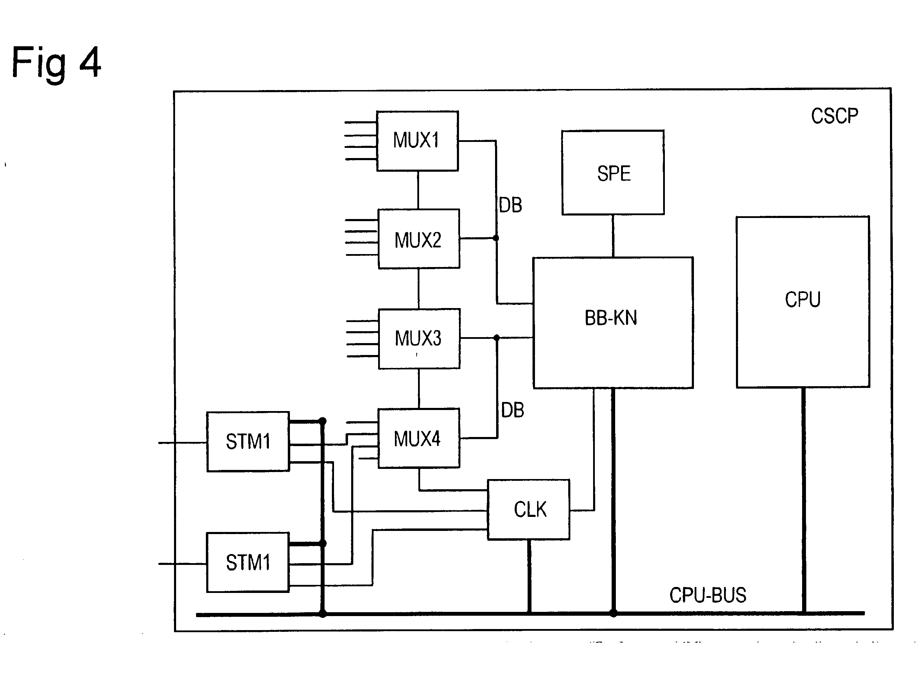

Fig. 4 zeigt eine schematische Darstellung der wesentlichen Funktionseinheiten der Koppel- und Steuereinheit CSCP. Für eine zell-basierte Datenvermittlung durch die Breitband-Anschlußeinheit BB-AE weist die Koppel- und Steuereinheit CSCP im wesentlichen ein zell-basiertes Koppelfeldmodul BB-KN und eine Steuereinheit CPU auf. Des weiteren umfaßt die Koppel- und Steuereinheit CSCP 4 Multiplexereinrichtungen MUX1,..., MUX4 zum Anschluß des zell-basierten Koppelfeldmoduls BB-KN an das Breitband-Bussystem BB-BUS und weitere STM1-Anschlußeinheiten STM1 zum direkten Anschluß der Koppel- und Steuereinheit CSCP an das ATM-basierte Kommunikationsnetz ATM-KN bzw. an ein anderes Kommunikations- oder Rechnernetz. Zur Steuerung einer Datenübermittlung ist die Steuereinheit CPU über das CPU-Bussystem CPU-BUS mit dem zell-basierten Koppelfeldmodul BB-KN, mit einer Zeitgabeeinheit CLK und den STM1-Anschlußeinheiten STM1 verbunden. Für eine einheitliche Taktversorgung der Koppel- und Steuereinheit CSCP ist die Zeitgabeeinheit CLK mit den Multiplexereinrichtungen MUX1,...,MUX4, dem zell-basierten Koppelfeldmodul BB-KN und den STM1-Anschlußeinheiten STM1 verbunden.

Das zell-basierte Koppelfeldmodul BB-KN weist eine in zwei Teilspeicher untergliederte koppelfeldmodulindividuelle Speichereinheit SPE auf. Im ersten Teilspeicher der koppelfeldmodulindividuellen Speichereinheit SPE ist eine Vermittlungstabelle HTT - in der Literatur häufig mit 'Header Translation Table' bezeichnet - hinterlegt. Diese Vermittlungstabelle HTT beinhaltet die für eine Vermittlung von ATM-Zellen in Form eines Wertepaares - bestehend aus einem sogenannten Eingangs-VCI-Wert (Virtuell Channel Identifier) und einem sogenannten Ausgangs-VCI-Wert - gespeicherten notwendigen Vermittlungsinformationen, anhand der eine am zell-basierten Koppelfeldmodul BB-KN ankommende ATM-Zelle vermittelt wird. Der zweite Teilspeicher der koppelfeldmodulindividuellen Speichereinheit SPE dient der Zwischenspeicherung der in einem Nutzdatenbereich einer ATM-Zelle übermittelten Nutzdaten während der Vermittlung der ATM-Zelle im zell-basierten Koppelfeldmodul BB-KN.

Des weiteren weist das zell-basierte Koppelfeldmodul BB-KN zwei hochfrequente UTOPIA-Schnittstellen auf. Über die UTOPIA-Schnittstellen ist das zell-basierte Koppelfeldmodul BB-KN über jeweils einen 16-Bit-breiten zell-basierten UTOPIA-Datenbus DB mit jeweils zwei Multiplexereinrichtungen MUX1,..., MUX4 verbunden. Über den 16-Bit-breiten zell-basierten UTOPIA-Datenbus DB ist eine bidirektionale Datenübertragungsrate von 622 MBit/s realisierbar. Durch die Multiplexereinrichtungen MUX1,...,MUX4 - die beispielsweise wie in der deutschen Patentanmeldung mit dem amtlichen Kennzeichen 197 515 60.6 beschrieben ausgestaltet sind - erfolgt eine Umsetzung des Datenformats des 16-Bit-breiten zell-basierten UTOPIA-Datenbusses DB auf das Datenformat des 8-Bit-breiten Breitband-Bussystems BB-BUS. An die Multiplexereinrichtungen MUX1,...,MUX4 sind jeweils maximal vier 8-Bit-breite Datenbusse anschließbar, über die jeweils eine maximale bidirektionale Datenübertragungsrate von 310 MBit/s realisierbar ist.

Die Multiplexereinrichtungen MUX1,..., MUX4 sind somit entweder über das Breitband-Bussystem BB-BUS mit Breitband-Anschlußbaugruppen STM1, UTP25, ES bzw. mit Umwandlungseinheiten STMAX verbunden oder direkt über einen 8-Bit-breiten UTOPIA-Datenbus mit den in der Koppel- und Steuereinheit CSCP angeordneten STM1-Anschlußeinheiten (in der Figur beispielhaft für die Multiplexereinrichtung MUX4 dargestellt) verbunden.

Im folgenden soll anhand der Figuren 1 und 2 das Zusammenwirken der für eine Datenübermittlung zwischen zwei Kommunikationsendgeräten wesentlichen Funktionseinheiten näher erläutert werden:

Für eine Datenübermittlung ausgehend von einem über eine Teilnehmerschnittstelle TSS1,...,TSS64 einer ATM-Übergabeeinheit ATM-HUB an das ATM-basierte Kommunikationsnetz ATM-KN angeschlossenen ersten Kommunikationsendgerät KE zu einem über eine Teilnehmerschnittstelle einer Anschlußeinheit LTU1, ...,LTUn-1 der Vermittlungsanlage PBX angeschlossenen zweiten Kommunikationsendgerät KE erfolgt in der Anschlußeinheit AE der, dem ersten Kommunikationsendgerät KE zugeordneten ATM-Übergabeeinheit ATM-HUB eine Umwandlung des üblicherweise für eine Datenübermittlung zwischen dem ersten Kommunikationsendgerät KE und dem zweiten Kommunikationsendgerät KE vorgesehenen zeitmultiplex-orientierten Datenformats auf das Datenformat des ATM-basierten Kommunikationsnetzes ATM-KN. Eine bidirektionale Umwandlung zwischen dem zeitmultiplex-orientierten Datenformat und dem Datenformat des ATM-basierten Kommunikationsnetzes ATM-KN kann dabei beispielsweise gemäß der beiden, in der deutschen Patentanmeldung mit dem Aktenzeichen 198 436 25.4 vorgeschlagenen Umwandlungsverfahren erfolgen.

Die über das ATM-basierte Kommunikationsnetz ATM-KN übermittelten und durch die STMI-Anschlußbaugruppe STM1 der Breitband-Anschlußeinheit BB-AE, über welche die Vermittlungsanlage PBX mit dem ATM-basierten Kommunikationsnetz ATM-KN verbunden ist empfangenen umgewandelten Daten werden über das Breitband-Bussystem BB-BUS der Breitband-Anschlußeinheit BB-AE an eine der ATM-Übergabeeinheit ATM-HUB zugeordnete Umwandlungseinheit STMAX übermittelt. Die Umwandlungseinheit STMAX wandelt die empfangenen umgewandelten Daten gemäß dem in der Anschlußeinheit AE der, dem ersten Kommunikationsendgerät KE zugeordneten ATM-Übergabeeinheit ATM-HUB verwendeten Umwandlungsverfahren in das zeitmultiplex-orientierte Datenformat zurück. Anschließend werden die zu übermittelnden Daten über das Schmalband-Bussystem NB-BUS an die anschlußeinheitenindividuelle Steuerung LTUCX übermittelt, welche die zu übermittelnden Daten für eine Übermittlung über die LTU-Verbindungsleitung LTU-VL anpaßt (eine anschlußeinheiteninterne Datenübermittlung erfolgt über zeitmultiplex-orientierte 2 MBit/s Datenübertragungsstrecken; eine Datenübermittlung über die LTU-Verbindungsleitung LTU-VL erfolgt über zeitmultiplex-orientierte 4 MBit/s Datenübertragungsstrecken) und sie anschließend über die LTU-Verbindungsleitung LTU-VL an die Zentraleinheit ZE der Vermittlungsanlage PBX weiterleitet. In der Zentraleinheit ZE werden die zu übermittelnden Daten durch das Koppelnetz SN der Vermittlungsanlage PBX an die, dem zweiten Kommunikationsendgerät KE zugeordnete Anschlußeinheit LTU1,...,LTUn-1 vermittelt, welche die Daten an das zweite Kommunikationsendgerät KE weiterleitet.

Eine Datenübermittlung ausgehend vom zweiten Kommunikationsendgerät KE zum ersten Kommunikationsendgerät KE erfolgt auf analoge Weise in umgekehrter Richtung.

Für eine Datenübermittlung ausgehend vom ersten Kommunikationsendgerät KE zu einem ebenfalls über eine Teilnehmerschnittstelle TSS1,...,TSS64 einer ATM-Übergabeeinheit ATM-HUB an das ATM-basierte Kommunikationsnetz ATM-KN angeschlossenen dritten Kommunikationsendgerät KE erfolgt in der Anschlußeinheit AE der, dem ersten Kommunikationsendgerät KE zugeordneten ATM-Übergabeeinheit ATM-HUB eine Umwandlung des üblicherweise für eine Datenübermittlung zwischen dem ersten Kommunikationsendgerät KE und dem dritten Kommunikationsendgerät KE vorgesehenen zeitmultiplex-orientierten Datenformats auf das Datenformat des ATM-basierten Kommunikationsnetzes ATM-KN.

Die über das ATM-basierte Kommunikationsnetz ATM-KN übermittelten und durch die STM1-Anschlußbaugruppe STM1 der Breitband-Anschlußeinheit BB-AE empfangenen umgewandelten Daten werden über das Breitband-Bussystem BB-BUS der Breitband-Anschlußeinheit BB-AE an die Koppel- und Steuereinheit CSCP der Breitband-Anschlußeinheit BB-AE übermittelt. In Fällen, in denen die Koppel- und Steuereinheit CSCP direkt über eine STM1-Schnittstelle mit dem ATM-basierten Kommunikationsnetz ATM-KN verbunden ist - vgl. Fig. 4 - können die zu übermittelnden umgewandelten Daten direkt von der dem ersten Kommunikationsendgerät KE zugeordneten ATM-Übergabeeinheit ATM-HUB über das ATM-basierten Kommunikationsnetz ATM-KN an die Koppel- und Steuereinheit CSCP übermittelt werden.

In der Koppel- und Steuereinheit CSCP werden die zu übermittelnden umgewandelten Daten durch das zell-basierte Koppelfeldmodul BB-KN vermittelt und über das Breitband-Bussystem BB-BUS an die STMI-Anschlußbaugruppe STM1 übermittelt, durch welche die zu übermittelnden umgewandelten Daten über das ATM-basierte Kommunikationsnetz ATM-KN an die dem dritten Kommunikationsendgerät KE zugeordnete ATM-Übergabeeinheit ATM-HUB weitergeleitet werden. Alternativ können die zu übermittelnden umgewandelten Daten direkt über die STM1-Schnittstellen der Koppel- und Steuereinheit CSCP von der Koppel- und Steuereinheit-CSCP über das ATM-basierte Kommunikationsnetz ATM-KN an die betreffende ATM-Ubergabeeinheit ATM-HUB übermittelt werden.

Durch die Anschlußeinheit AE der, dem dritten Kommunikationsendgerät KE zugeordnete ATM-Übergabeeinheit ATM-HUB werden die zu übermittelnden umgewandelten Daten gemäß dem in der, dem ersten Kommunikationsendgerät KE zugeordnete ATM-Übergabeeinheit ATM-HUB verwendeten Umwandlungsverfahren in das zeitmultiplex-orientierte Datenformat zurückgewandelt und an das dritte Kommunikationsendgerät KE weiterleitet.

Eine Datenübermittlung ausgehend vom dritten Kommunikationsendgerät KE zum ersten Kommunikationsendgerät KE erfolgt auf analoge Weise in umgekehrter Richtung.

## Patentansprüche

1. Kommunikationssystem, mit über ein paket-orientiertes Kommunikationsnetz (ATM-KN) mit einer Kommunikationsanlage (PBX) in Verbindung stehenden Kommunikationsendgeräten (KE), die unter Zwischenschaltung von übergabeeinheiten (ATM-HUB) an das paket-orientierte Kommunikationsnetz (ATM-KN) angeschlossen sind,
**dadurch gekennzeichnet,**
**daß** die Kommunikationsanlage (PBX) eine Breitband-Anschlußeinheit (BB-AE) aufweist, die über eine zeitschlitz-orientierte Verbindungsleitung (LTU-VL) mit einer Zentraleinheit ; (ZE) der Kommunikationsanlage (PBX) und über mindestens eine paket-orientierte Netzanschlußschnittstelle (STM1) mit dem paket-orientierten Kommunikationsnetz (ATM-KN) verbunden ist, wobei mehrere Übergabeeinheiten (ATM-HUB) über eine gemeinsame paket-orientierte Netzanschlußschnittstelle (STM1) an der Breitband-Anschlußeinheit (BB-AE) angeschlossen sind,
**daß** die Breitband-Anschlußeinheit (BB-AE) den Übergabeeinheiten (ATM-HUB) zugeordnete Umwandlungseinheiten (STMAX) aufweist, durch die eine bidirektionale Umwandlung zwischen dem Datenformat des paket-orientierten Kommunikationsnetzes (ATM-KN) und einem zeitschlitz-orientierten Datenformat erfolgt, und
**daß** die Breitband-Anschlußeinheit (BB-AE) ein Koppelfeldmodul (BB-KN) zum Zusammenfassen der von den Umwandlungseinheiten (STMAX) an die zugeordneten Übergabeeinheiten (ATM-HUB) zu übermittelnden Daten für eine Übermittlung über die paketorientierte Netzanschlußschnittstelle (STM1) aufweist.

2. Anordnung nach Anspruch 1,
**dadurch gekennzeichnet,**
**daß** die Breitband-Anschlußeinheit (BB-AE) ein Breitband-Bussystem (BB-BUS) zur anschlußeinheiteninternen Übermittlung eines paket-orientierten Datenstroms und ein Schmalband-Bussystem (NB-BUS) zur anschlußeinheiteninternen Übermittlung eines zeitschlitz-orientierten Datenstroms aufweist, und
**daß** das Breitband-Bussystem (BB-BUS) und das Schmalband-Bussystem (NB-BUS) durch die Umwandlungseinheiten (STMAX) miteinander koppelbar sind.

3. Anordnung nach Anspruch 2,
**dadurch gekennzeichnet,**
**daß** an das Schmalband-Bussystem (NB-BUS) eine Verbindungseinrichtung (LTUCX) angeschlossen ist, über welche die Breitband-Anschlußeinheit (BB-AE) über die zeitschlitz-orientierte Verbindungsleitung (LTU-VL) mit der, ein Koppelfeld (SN) und eine zentrale Steuereinheit (CC) aufweisenden Zentraleinheit (ZE) der Vermittlungsanlage (PBX) verbindbar ist.

4. Anordnung nach Anspruch 3,
**dadurch gekennzeichnet,**
**daß** die Verbindungseinrichtung(LTUCX) über mindestens eine zeitmultiplex-orientierte 4 MBit/s Datenübertragungsstrecke mit der Zentraleinheit (ZE) verbunden ist.

5. Anordnung nach Anspruch 4,
**dadurch gekennzeichnet,**
**daß** die Anzahl der zeitmultiplex-orientierten 4 MBit/s Datenübertragungsstrecken durch die Anzahl der in der Breitband-Anschlußeinheit (BB-AE) angeordneten Umwandlungseinheiten (STMAX) bestimmt ist.

6. Anordnung nach einem der Ansprüche 2 bis 5,
**dadurch gekennzeichnet,**
**daß** an das Schmalband-Bussystem (NB-BUS) angeschlossene Anschlußeinheiten (STMAX, LTUCX, SLM; TM) über eine oder eine Mehrzahl von zeitmultiplex-orientierten 2 MBit/s Datenübertragungsstrecken miteinander verbunden sind.

7. Anordnung nach einem der Ansprüche 2 bis 6,
**dadurch gekennzeichnet,**
**daß** das Breitband-Bussystem (BB-BUS) und das Schmalband-Bussystem (NB-BUS) jeweils Anschlußplätze für mehrere Anschlußeinheiten (STMAX, LTUCX, CSCP, UTP25, STM1, ES) aufweisen.

8. Anordnung nach Anspruch 6,
**dadurch gekennzeichnet,**
**daß** an die Anschlußplätze Breitband-Anschlußbaugruppen (STM1, UTP25, ES) und/oder Schmalband-Anschlußbaugruppen (SLM, TM) anschließbar sind.

9. Anordnung nach Anspruch 7 oder 8,
**dadurch gekennzeichnet,**
**daß** die Anschlußeinheiten (CSCP, STMAX, STM1, UTP25, ES) über jeweils eine UTOPIA-Schnittstelle (Universal Test and Operation PHY Interface for ATM) mit dem Breitband-Bussystem (BB-BUS) verbindbar sind.

## Claims

1. Communications system comprising communication terminals (KE) which are connected to a communications system (PBX) via a packet-oriented communication network (ATM-KN) and which are connected to the packet-oriented communication network (ATM-KN) with interposition of hubs (ATM-HUB),
**characterized in that** the communications system (PBX) has a broadband access unit (BB-AE) which is connected to a central unit (ZE) of the communications system (PBX) via a time-slot-oriented link (LTU-VL) and to the packet-oriented communication network (ATM-KN) via at least one packet-oriented network access interface (STM1), a number of hubs (ATM-HUB) being connected to the broadband access unit (BB-AE) via a common packet-oriented network access interface (STM1),
that the broadband access unit (BB-AE) has conversion units (STMAX) allocated to the hubs (ATM-HUB), by means of which a bi-directional conversion between the data format of the packet-oriented communication network (ATM-KN) and a time-slot-oriented data format is effected, and
that the broadband access unit (BB-AE) has a switching matrix module (BB-KN) for combining the data to be transmitted to the associated hubs (ATM-HUB) from the conversion units (STMAX) for transmission via the packet-oriented network access interface (STM1).

2. Arrangement according to claim 1, **characterized in that** the broadband access unit (BB-AE) has a broadband bus system (BB-BUS) for transmitting a packet-oriented data stream within the access unit and a narrowband bus system (NB-BUS) for transmitting a time-slot-oriented data stream within the access unit, and that the broadband bus system (BB-BUS) and the narrowband bus system (NB-BUS) can be coupled to one another by the conversion units (STMAX).

3. Arrangement according to claim 2, **characterized in that** the narrowband bus system (NB-BUS) is connected to a line trunk unit controller (LTUCX) via which the broadband access unit (BB-AE) can be connected to the central unit (ZE), exhibiting a switching network (SN) and a central controller (CC), of the switching system (PBX) via the time-slot-oriented link (LTU-VL).

4. Arrangement according to claim 3, **characterized in that** the line trunk unit controller (LTUCX) is connected to the central unit (ZE) via at least one time-division multiplex-oriented 4-Mbit/s data communication link.

5. Arrangement according to claim 4, **characterized in that** the number of time-division multiplex-oriented 4-Mbit/s communication links can be determined by the number of the conversion units (STMAX) arranged in the broadband access unit (BB-AE).

6. Arrangement according to one of claims 2 to 5, **characterized in that** access units (STMAX, LTUCX, SLM; TM) connected to the narrowband bus system (NB-BUS) are connected to one another via one or a plurality of time-division multiplex-oriented 2-Mbit/s communication links.

7. Arrangement according to one of claims 2 to 6, **characterized in that** the broadband bus system (BB-BUS) and the narrowband bus system (NB-BUS) in each case have access locations for a number of access units (STMAX, LTUCX, CSCP, UTP25, STM1, ES).

8. Arrangement according to claim 6, **characterized in that** broadband access modules (STM1, UTP25, ES) and/or narrowband access modules (SLM, TM) can be connected to the access locations.

9. Arrangement according to claim 7 or 8, **characterized in that** the access units (CSCP, STMAX, STM1, UTP25, ES) can be connected to the broadband bus system (BB-BUS) via in each case one UTOPIA (Universal Test and Operation PHY Interface for ATM) interface.

## Revendications

1. Système de communication comportant des terminaux de communication (KE) en liaison avec une installation de communication (PBX) par l'intermédiaire d'un réseau de communication (ATM-KN) orienté paquets, les terminaux de communication étant raccordés au réseau de communication (ATM-KN) orienté paquets par interconnexion d'unités de transfert (ATM-HUB),
**caractérisé**
**en ce que** l'installation de communication(PBX) présente une unité de raccordement à large bande (BB-AE) qui est reliée à une unité centrale (ZE) de l'installation de communication (PBX) par l'intermédiaire d'une ligne de liaison (LTU-VL) orientée créneau temporel et au réseau de communication (ATM-KN) orienté paquets par l'intermédiaire d'au moins une interface de raccordement au réseau (STM1) orientée paquets, plusieurs unités de transfert (ATM-HUB) étant raccordées à l'unité de raccordement à large bande (BB-AE) par l'intermédiaire d'une interface commune de raccordement au réseau (STM1) orientée paquets,
**en ce que** l'unité de raccordement à large bande (BB-AE) présente des unités de conversion (STMAX) affectées aux unités de transfert (ATM-HUB), au moyen desquelles unités de conversion une conversion bidirectionnelle est réalisée entre le format de données du réseau de communication orienté paquets (ATM-KN) et un format de données orienté créneau temporel, et
**en ce que** l'unité de raccordement à large bande (BB-AE) présente un module de champ de couplage (BB-KN) pour regrouper les données à transmettre aux unités de transfert correspondantes (ATM-HUB) par les unités de conversion (STMAX) pour une transmission par l'intermédiaire de l'interface de raccordement au réseau (STM1) orientée paquets.

2. Dispositif selon la revendication 1,
**caractérisé**
**en ce que** l'unité de raccordement à large bande (BB-AE) présente un système de bus à large bande (BB-BUS) pour la transmission, interne à l'unité de raccordement, d'un flux de données orienté paquets, et un système de bus à bande étroite (NB-BUS) pour la transmission, interne à l'unité de raccordement, d'un flux de données orienté créneau temporel, et
**en ce que** le système de bus à large bande (BB-BUS) et le système de bus à bande étroite (NB-BUS) peuvent être couplés entre eux au moyen des unités de conversion (STMAX).

3. Dispositif selon la revendication 2,
**caractérisé**
**en ce qu'**un dispositif de liaison (LTUCX) est raccordé au système de bus à bande étroite (NB-BUS), par l'intermédiaire duquel dispositif de liaison l'unité de raccordement à large bande (BB-AE) peut être raccordée à l'unité centrale (ZE), présentant un champ de couplage (SN) et une unité de commande centrale (CC), de l'installation de commutation (PBX) par l'intermédiaire de la ligne de liaison (LTU-VL) orientée créneau temporel.

4. Dispositif selon la revendication 3,
**caractérisé**
**en ce que** le dispositif de liaison (LTUCX) est relié à l'unité centrale (ZE) par l'intermédiaire d'au moins un trajet de transmission de données de 4 Mbit/s orienté multiplexage temporel.

5. Dispositif selon la revendication 4,
**caractérisé**
**en ce que** le nombre de trajets de transmission de données de 4 Mbit/s orientés multiplexage temporel est déterminé par le nombre d'unités de conversion (STMAX) disposées dans l'unité de raccordement à large bande (BB-AE).

6. Dispositif selon l'une quelconque des revendications 2 à 5,
**caractérisé**
**en ce que** les unités de raccordement (STMAX, LTUCX, SLM ; TM) raccordées au système de bus à bande étroite (NB-BUS) sont reliées entre elles par l'intermédiaire d'un ou d'une pluralité de trajets de transmission de données de 2 Mbit/s orientés multiplexage temporel.

7. Dispositif selon l'une quelconque des revendications 2 à 6,
**caractérisé**
**en ce que** le système de bus à large bande (BB-BUS) et le système de bus à bande étroite (NB-BUS) présentent chacun des emplacements de raccordement pour plusieurs unités de raccordement (STMAX, LTUCX, CSCP, UTP25, STM1, ES).

8. Dispositif selon la revendication 6,
**caractérisé**
**en ce que** des ensembles de raccordement à large bande (STM1, UTP25, ES) et/ou des ensembles de raccordement à bande étroite (SLM, TM) peuvent être raccordés aux emplacements de raccordement.

9. Dispositif selon la revendication 7 ou 8,
**caractérisé**
**en ce que** les unités de raccordement (CSCP, STMAX, STM1, UTP25, ES) peuvent être reliées au système de bus à large bande (BB-BUS) par l'intermédiaire de respectivement une interface UTOPIA (Universal Test and Operation PHY Interface for ATM).
